# EUROPEAN PATENT APPLICATION

(11) **EP 4 831 852 A1**
(43) Date of publication of application: **28.10.2026**
(21) Application number: 26171488.5
(22) Date of filing: 09.04.2026
(51) Int. Cl.: G06F 21/57, H04L 9/32

(54) **MITIGATING SIGNING LATENCY USING TUNED NONCE**

(30) Priority: 24.04.2025 US 202519188977
(71) Applicant: Microsoft Technology Licensing, LLC, Redmond, WA 98052 (US)
(72) Inventor: BISHEH NIASAR, Mojtaba, Redmond, 98052 (US); SONI, Vishal, Redmond, 98052 (US); PILLILLI, Bharat S., Redmond, 98052 (US)
(74) Representative: CMS Cameron McKenna Nabarro Olswang LLP

(57) **Abstract**

A cryptographic device performs a method including installing a device firmware update in the cryptographic device that includes a device identifier composition engine (DICE). In response to installing the device firmware update and during a boot operation of the device, performing, using a unique device secret (UDS), a first set of cryptographic operations to generate a first set of deterministic signatures. A tuned nonce is selected based on a selected number of signature generation rounds. A non-deterministic signature is generated based on the tuned nonce during the boot operation. The boot operation is completed to enable run time generation of signatures.

## Description

### BACKGROUND

Data centers rely on computing resources, such as processor devices, storage devices, switch devices, and other resources, being available a high percentage of the time. Updating a computing resource with firmware requires rebooting the computing resource. It is desired that the rebooting be performed in a manner that is fast and predictable to minimize resource down time.

As quantum computing advances, the cryptographic foundations of modem system-on-chip (SoC) designs face significant uncertainties. The Device Identity Composition Engine (DICE), a critical framework used in computing resources for establishing secure resource/device identities, must evolve to address these emerging threats while maintaining fast and reliable boot processes. Post-Quantum Cryptography (PQC) introduces complexities, particularly in signature operations that are performed during booting of devices where non-deterministic timing can disrupt or at least slow booting, reducing resource availability.

### SUMMARY

A cryptographic device performs a method including installing a device firmware update in the cryptographic device that includes a device identifier composition engine (DICE). In response to installing the device firmware update and during a boot operation of the device, performing, using a unique device secret (UDS), a first set of cryptographic operations to generate a first set of deterministic signatures. A tuned nonce is selected based on a selected number of signature generation rounds. A non-deterministic signature is generated based on the tuned nonce during the boot operation. The boot operation is completed to enable run time generation of signatures.

### BRIEF DESCRIPTION OF THE DRAWINGS

FIG. 1 is a block flow diagram of a method performed during manufacturing of a device incorporating cryptographic functions according to an example embodiment.
FIG. 2 illustrates a device that includes an optimal unique device secret (UDS) seed that is used during a secure reboot process according to an example embodiment.
FIG. 3 is a block diagram of a cryptographically enabled device interfacing with a manufacturing server during UDS selection and installation according to an example embodiment.
FIG. 4 is a flowchart illustrating a method of identifying and storing optimal UDS seeds in a cryptographic device during manufacture according to an example embodiment.
FIG. 5 is a greatly simplified block diagram of a post quantum computing cryptographic hardware engine to illustrate generation of a tuned nonce according to an example embodiment.
FIG. 6A, 6B, 6C, and 6D are a detailed block diagram of a cryptographic device for using a tuned nonce according to an example embodiment.
FIG. 7 is a flowchart illustrating a computer implemented method 700 of booting a cryptographic device using a tuned nonce according to an example embodiment.
FIG. 8 is a flowchart illustrating a computer implemented method 700 of generating and using a tuned nonce and booting a cryptographic device following a firmware update according to an example embodiment.
FIG. 9 is a block schematic diagram of a computer system to implement one or more example embodiments.

### DETAILED DESCRIPTION

In the following description, reference is made to the accompanying drawings that form a part hereof, and in which is shown by way of illustration specific embodiments which may be practiced. These embodiments are described in sufficient detail to enable those skilled in the art to practice the invention, and it is to be understood that other embodiments may be utilized and that structural, logical and electrical changes may be made without departing from the scope of the present invention. The following description of example embodiments is, therefore, not to be taken in a limited sense, and the scope of the present invention is defined by the appended claims.

A Device Identity Composition Engine (DICE) of a cryptographically enabled device provides a structured security framework for embedded devices by establishing an immutable root of trust. However, ensuring consistent boot times in a post-quantum environment requires a refined approach to key generation and signing processes. Since the generation of a successful validated signature may take a variable number of attempts depending on the seed used to generate the signature, booting the DICE can take a variable amount of time.

A DICE framework includes multiple layers of signature generation using different sets of keys and nonce values. The role of deterministic signatures within DICE's lower layers is indispensable, ensuring the security and continuity of the device's identity and the trust chain. In a resource-constrained SoC, a fixed boot-time constraint necessitates consistent cryptographic operations. By selecting an optimal seed during manufacturing, private key generation produces successful signatures within a minimal number of attempts. This deterministic approach guarantees a reliable and repeatable boot process, fortifying the chain of trust from power-on.

While deterministic signing stabilizes the initial boot phase, higher layers of a stack of operations require flexibility to accommodate firmware updates and variable inputs. The higher layers calculate signatures on a key that includes a nonce. Nonce adjustments are made to optimize signing efficiency. This adaptive approach mitigates PQC-related signature generation latency fluctuations, ensuring rapid authentication without compromising security.

An improved cryptographic engine performs a tuned nonce derivation to ensure both cryptographic resilience, operational efficiency, and reduced boot times to allow seamless firmware upgrades for post-quantum convergence without compromising boot times or cryptographic performance. The tuned nonce is selected to reduce the amount of time needed to successfully generate a signature.

Unique device secret (UDS) seeds form the bedrock of device security, providing a cryptographic key or value that is unique to each device. The device UDS seed value is securely stored, typically in non-volatile memory such as fuse banks. The UDS seed serves to generate device-specific identifiers and cryptographic keys, which are crucial for secure boot processes. Within frameworks like DICE (Device Identifier Composition Engine), the UDS seed enables the creation of a trustworthy and recoverable device identity, with deterministic signatures ensuring the continuity of the trust chain.

The advent of quantum computing, however, brings significant risks to cryptographic methods that use a UDS seed. PQC algorithms, designed to counteract quantum threats, introduce new complexities. Unlike traditional algorithms, PQC methods often exhibit variable latencies during signing operations due to the inherent nature of certain algorithms, such as ML-DSA. ML-DSA refers to the Module-Lattice-Based Digital Signature Algorithm, a post-quantum digital signature scheme standardized by a National Institute of Standards and Technology (NIST) (Federal Information Processing Standards (FIPS) 204) specification and is believed to be secure against at least some quantum computer attacks.

Booting involves the generation of signatures using the UDS seed. If signature generation takes a variable amount of time, some boot times may be longer than desired. The variable latencies in signature generation pose challenges to the DICE, which relies on fixed boot-times for secure initialization.

The ML-DSA algorithm integrates a validity check into its signing process. If the check fails, the signature generation must be repeated, leading to the possibility of continuous loops in the worst-case scenario. The unpredictability of this process complicates efforts to design systems with guaranteed boot-time performance, a critical factor in cloud-based applications.

Based on the ML-DSA specification, the success rate for signature generation using UDS seeds and validity checking is as follows: ${e}^{- n ⋅ β \left(l/{γ}_{1}+k/{γ}_{2}\right)}$

ML-DSA parameters are listed in Table 1 as follows:

**Table 1**

| Parameter | MLDSA-87 |
|---|---|
| *n* | 256 |
| *q* | 8380417 |
| *β* | 120 |
| *l* | 7 |
| *k* | 8 |
| *γ*₁ | 2¹⁹ |
| γ₂ | (*q -* 1)/32 |

Using these parameters, success rates for the first 15 rounds of signing operations is shown in Table 2:

**Table 2**

| Rounds | Cumulative Success Rate |
|---|---|
| 1 | 25.9611% |
| 2 | 45.1823% |
| 3 | 59.4136% |
| 4 | 69.9502% |
| 5 | 77.7515% |
| 6 | 83.5274% |
| 7 | 87.8039% |
| 8 | 90.9701% |
| 9 | 93.3144% |
| 10 | 95.0500% |
| 11 | 96.3351% |
| 12 | 97.2865% |
| 13 | 97.9910% |
| 14 | 98.5125% |
| 15 | 98.8987% |

To counteract these uncertainties, an optimal UDS seed selection process ensures that private key derivation remains stable across the first layers of boot cycles. Keeping nonce as all zero during manufacturing testing allows one to precompute optimal seed values for fast boot execution.

In the presence of firmware updates, fixed seed selection becomes impractical. A non-deterministic ML-DSA mechanism enables tuned nonce derivation, ensuring fast and consistent signing rounds under changing conditions.

By refining seed selection and integrating a hybrid signing strategy, the method ensures that SoCs can achieve fast and reliable boot cycles in a post-quantum landscape. Deterministic optimization at lower layers guarantees predictable performance, while tuned nonce derivation at higher layers, such as first mutable code (FMC) 150, preserves signing efficiency under variable conditions.

This dual-layer strategy not only fortifies DICE against emerging cryptographic threats but also ensures that system performance remains uncompromised. As the industry navigates the uncertainties of post-quantum convergence, this methodology serves as a cornerstone for secure, efficient, and future-ready device authentication.

The generation of an optimal UDS seed is described, followed by a description of the generation of a tuned nonce for use following firmware updates.

A method for selecting an optimal UDS seed for PQC systems reduces signing times while maintaining the high security and performance required for cloud infrastructure.

A seed generation process is a critical step in cryptographic device security. A re-seeding mechanism is used to identify an optimal UDS seed, which allows for faster and more consistent signature generation. The method, for example, streamlines boot operations without compromising security.

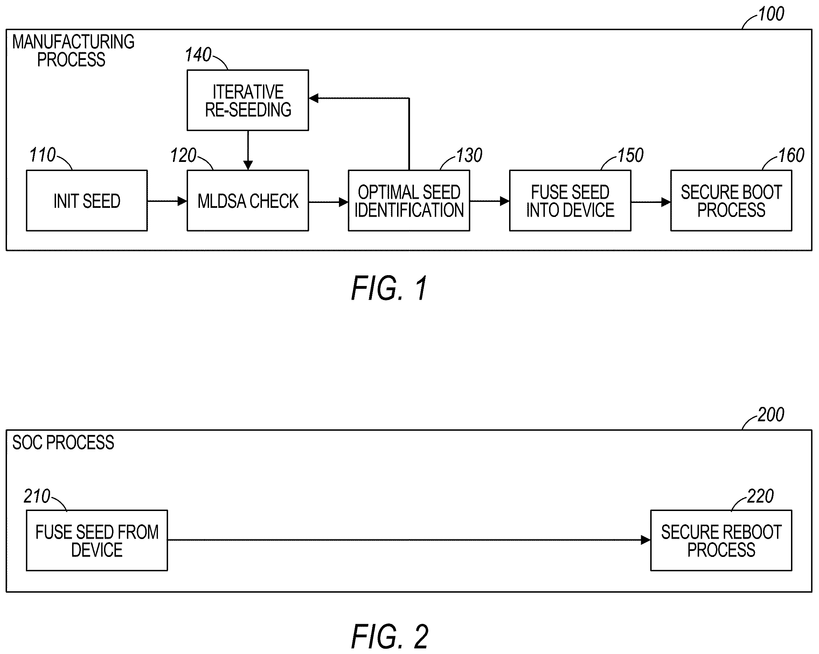

FIG. 1 is a block flow diagram of a method 100 performed during manufacturing of a device incorporating ML-DSA functions. At 110, an initial UDS seed is selected. The initial seed may be randomly selected from a set of 256 bit, or greater, seeds. Since some seeds may be rejected during method 100, a larger seed may be used to increase the number of available seeds thereby increasing security of the seed.

ML-DSA is then performed at 120 by the device using the initial seed 110 combined with a zeroed nonce where nonce values are set to zeros. The number of signatures generated during ML-DSA signature generation or the time required to generate a successful signature is tracked and provided to an optimal seed identification operation 130. Operation 130 will check the tracked number of signatures needed to be generated to find a valid signature or time required to find a valid signature against a threshold. The threshold in one example may be set to two or three signature generations or the corresponding time it should take for two or three signature generations. In further examples, more signature generations such as three or four or more may be selected as desired. The threshold should not be set so high as to interfere with booting the device after the device is operational.

Method 100 identifies the seed that, when combined with a zeroed nonce, consistently produces a successful signature. If operation 130 determines that the resulting UDS seed is not optimal, an iterative reseeding operation 140 is performed. Iterative reseeding provides a new randomly selected initial UDS seed for checking at operation 120. Operations 120, 130, and 140 are iteratively repeated until an optimal UDS seed is identified based on the threshold comparison. The term "optimal" is used to describe a UDS seed that produces a valid signature within the threshold. This optimal UDS seed is fused into the device fuses or ROM at operation 150 and a secure boot process based on the fused optimal seed is performed at 160 as a final check to ensure successful booting occurs within a desired amount of time.

By systematically testing potential seed candidates during the manufacturing flow, an optimal seed is identified that reduces the time required for signature generation. Selecting optimized UDS seeds ensures that a private key, derived from the optimal seed, consistently yields successful digital signatures with minimal attempts.

The refinement of the UDS seed is performed during the manufacturing phase, where testing identifies the seed that, when combined with a zeroed nonce, consistently produces a successful signature. This testing procedure guarantees that devices will experience fast boot times post-manufacture, eliminating the need for further testing or seed regeneration during operation. After the optimal seed is identified and fused into the device, it guarantees quick and secure boot-ups, essential for the efficient performance of cloud infrastructure.

FIG. 2 illustrates a device 200 that includes an optimal UDS seed 210 that is used during a secure reboot process 220. The reboot process 220 may occur during startup following installation of the device 200 or may occur following a firmware update.

The one-time testing and UDS seed assignment during manufacturing ensures that every device is equipped with a pre-tested, optimized UDS seed, guaranteeing efficient cryptographic operations even in the presence of post-quantum-era challenges.

The assigned UDS seed not only accelerates boot times but also contributes to the long-term operational efficiency of cloud systems, where high availability and minimal downtime are paramount. In further examples, one device may be used to generate multiple optimal UDS seeds which are then assigned to further devices being manufactured. Alternatively, each device may be used to generate its own optimal UDS seed. In still further examples, a simulation of method 100 may be used to generate optimal UDS seeds.

By integrating an efficient seed selection method within the manufacturing flow, devices consistently achieve faster boot times while maintaining the highest levels of security providing a significant advantage for cloud infrastructure, where both speed and security are critical. The method is a key step in future-proofing devices against the uncertainties introduced by quantum computing, ensuring that the cryptographic technologies of tomorrow are as secure and efficient as possible.

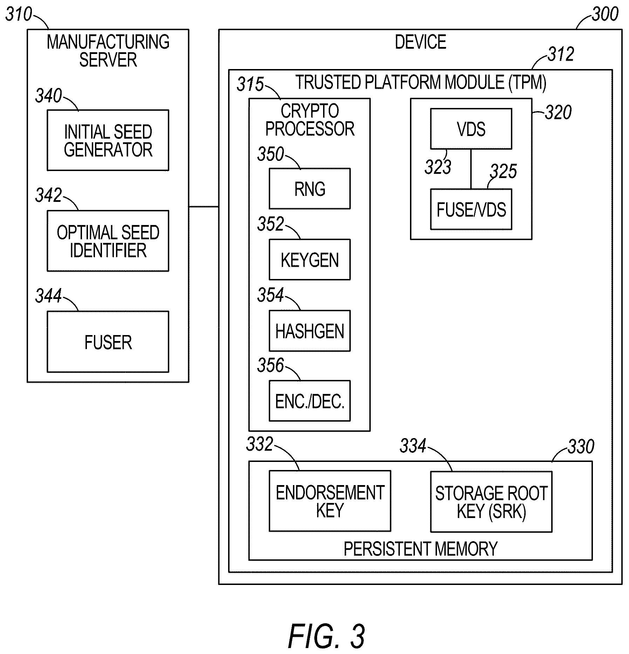

FIG. 3 is a block diagram of a cryptographically enabled device 300 interfacing with a manufacturing server 310 during UDS selection and installation. Device 300 includes a root of trust (RoT) or trusted platform module (TPM) 312 communicatively coupled to manufacturing server 310. TPM 312 includes a secure crypto-processor 315 that implements the International Organization for Standards (ISO)/International Electrotechnical Commission (IEC) 11889 standard in one example. Common uses for the TPM 312 include verifying that the boot process starts from a trusted combination of hardware and software and storing disk encryption keys.

The TPM 312 serves as the foundational security element for the device 300. The TPM 312 is responsible for storing and protecting cryptographic keys and identities and providing safe cryptographic services to different clients, such as by crypto-processor 315.

The TPM 312 is an SoC, a chip, that includes a variety of communicatively coupled hardware elements. The TPM 312 as illustrated includes a versatile memory 320, crypto-processor 315, and a persistent memory, such as a fuse 325.

The TPM 312 further includes a persistent memory 330 that includes an endorsement key (EK) 332 and a storage root key 334. The EK 332 is a pair of public/private keys, of which the private key is embedded in the TPM 312 and *never* leaves it. The public EK is contained in a certificate and is only used in a limited number of procedures. The reason for limiting the use of the EK 332 is because the EK 332 is unique to each TPM 312 and consequently may be used to identify the device 300. Therefore, to protect user privacy when interacting with other entities, the use of the EK 332 is restricted and internally generated aliases, the keys, and other identities in the versatile memory 320 are used for more routine transactions.

The manufacturing server 310 performs portions of method 100 and will provide the optimal UDS for storing in tamper resistant persistent memory before shipping the device 300.

Manufacturing server 310 includes an initial seed generator 340 for generating initial UDS seeds 323 on which to perform the ML-DSA check via crypto-processor 315 during a boot operation. Optimal seed identifier 342 is used to perform optimal UDS seed identification by determining if a valid signature can be generated within a desired time period, and fuser 344 will store the UDS seed 323 in fuse 325.

The storage root key (SRK) 334 is also stored in the persistent memory 330. This key also never leaves this secure storage during normal operation. A third type of key, the Attestation Identity Key (AIK), the keys in the versatile memory 320, may also be stored within the TPM 312. These keys may be regarded as an alias for the EK 332. Each TPM 312 can support many AIKs, thus the user can have many unlinkable keys that can be used to maintain anonymity between different service providers who require proof of identity. These AIKs must, therefore, be persistent and although they could be stored on the TPM 312 non-volatile memory, for practical reasons the standards recommend keeping the AIK keys in secure external storage. The TPM 312, however, provides a volatile storage area where one or more AIK keys can be loaded when in use.

Crypto-processor 315 may include a random number generator (RNG) 350, a key generator 352, a hash generator 354, and an encryption/decryption engine 356. Hash generator 354 can, for example, generate secure hash algorithm (SHA)-2 cryptographic hashes or other cryptographic hashes. The hash generator 354 hashes the input data and produces a digest. The hash generator 354 also forms the basis of a Hash Based Message Authentication Code (HMAC) engine and is used in a number of cryptographic procedures carried out by the TPM 312, for example: in the computation of digital signatures, including during boot operations, and for creating key objects where a hash of the key may be required as part of an integrity protection mechanism.

The key generator 352 generates cryptographic keys suitable for use with the TPM 312. ML-DSA may be utilized for both key generation and for data signing. The key generation performed by the key generator 352 can be a computationally intensive task and since such keys are widely used in the TPM 312, for signing and providing secure storage, the standard specifies that the TPM 312 should include a module specifically for this task. ML-DSA can also be used for key generation, signature generation, and signature validation. Maintaining the principle of key separation, the TPM 312 uses dedicated signing keys for signing data, and separate storage key pairs for encryption and decryption by the encryption/decryption engine 356.

The UDS seed can be stored in a memory location that is associated with the fuse 325. Fuses in memory devices are small, programmable storage elements that can be set to a specific state (typically on or off) and then retain that state even when power is removed. The fuse 325 can be electrically programmable by the fuser 344 of the manufacturing server 310 and located in a specific section of non-volatile memory and consist of a few registers, where each bit represents a different fuse setting.

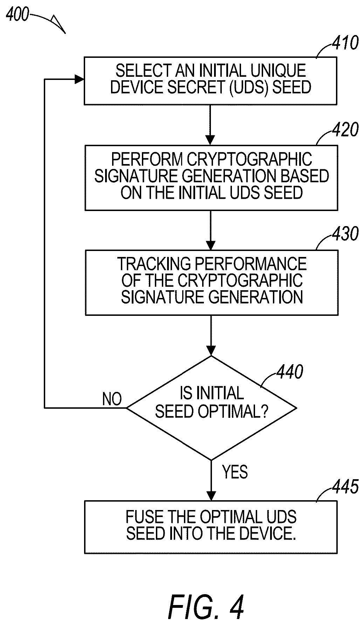

FIG. 4 is a flowchart illustrating a method 400 of identifying and storing optimal UDS seeds in a cryptographic device during manufacture. Method 400 begins at operation 410 by selecting an initial unique device secret (UDS) seed for a cryptographically enabled device. The initial UDS seed may be provided by a random number generator (RNG) external to the device, such as by a manufacturing server. The device is then booted and performs cryptographic signature generation during the boot operation based on the initial UDS seed. Performance of the cryptographic signature generation is tracked at operation 430 and compared to a performance threshold at operation 440 to determine if the initial seed is optimal. If after one iteration of operations 410, 420 and 430 the initial seed has performance within the threshold, the initial seed is optimal and is stored fused at operation 440 into the device. If the initial seed is not optimal at operation 440, processing returns to operation 410 to select another initial seed. The iteration of initial seed selection and signature generation is repeated until an optimal seed is identified at operation 440 and stored at operation 450.

In one example, the device performs operation 420 and also part of operation 430, tracking the number of iterations or time required to generate a valid signature giving an initial UDS seed. The manufacturing server may then receive the performance information and perform operation 440 to determine whether or not to perform another iteration or store the identified optima UDS seed. The manufacturing server can also perform operation 430 by tracking the time taken for the device to generate a valid signature.

In a further example, the cryptographic signature generation operation 420 performed by the device is itself iterative, as multiple signatures may be generated prior to a signature being validated. These rounds of signature generation operations may be counted or timed by the device during operation 420 and compared to a desired optimal performance of rounds or times referred to as a threshold. If exceeded, the cryptographically enabled device itself may stop the signature generation operation 420, effectively performing operations 430 and 440, and request a new initial UDS seed at operation 410 from the server as opposed to reporting the performance to the server at operation 430. Such a shortcut may save time in finding optimal UDS seeds by cutting operation 430 short once the threshold number of rounds is met or exceeded without successfully finding an optimal UDS seed.

In one example, the performance threshold is set to a selected number of rounds of signature generation, such as 2 or 3, or more rounds.

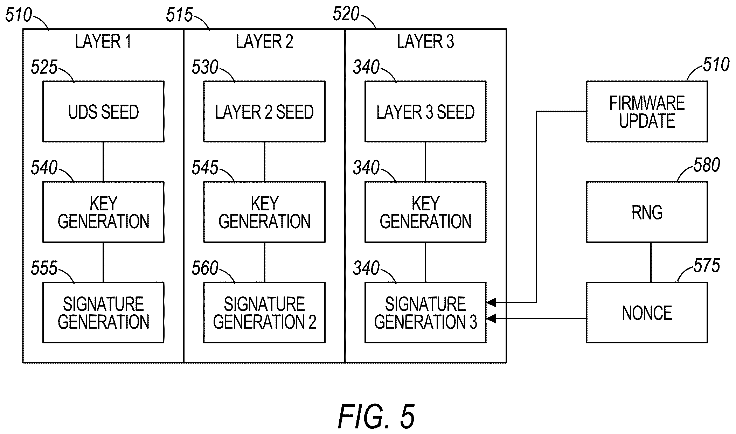

FIG. 5 is a greatly simplified block diagram of a post quantum computing cryptographic hardware engine 500 to illustrate generation of a tuned nonce. Engine 500 may be based on a Caliptra DICE framework. Caliptra provides its root of trust (RoT) code with a cryptographic identity in accordance with the Trusted Computing Group (TCG) DICE specification. This is rooted in a read-only memory (ROM) level and provides an attestation over the security state of the RoT measurement (RTM) as well as the code that the RTM booted.

The term ROM as used herein includes a combination of mask ROM and hardware (HW) macros implementing DICE key derivation and power-on latch, hiding the optimized unique device secret (UDS) seed, and only making the compound device identifier (CDI)-derived signing key visible to firmware.

Engine 500 includes a chain of trust that includes three layers 510, 515, and 520. Layer 510 includes an optimized UDS seed 525 that is used to generate different seeds in further layers, including layer 2 seed 530 and layer 3 seed 535. Each layer uses the layer's respective seed to generate respective keys 540, 545, and 550. The keys are then used to perform signature generation at 555, 560, and 565. The seeds are different at each layer, resulting in different key generation and different signature generation. As the signature generation utilizes an ML-DSA algorithm, it can take a variable number of rounds. The first two layers of signature generation during a boot operation utilize the optimized UDS seed 525 along with a zeroed nonce to ensure booting within a desired amount of time. The third layer 520 signature generation at 565, in response to a firmware update 570, will use a tuned nonce 575 to optimize signing efficiency during boot. A firmware update 570 can introduce variable input to key generation and hence the value of the nonce which make layer 3 signature generation non-deterministic.

The tuned nonce 575 may be generated by a device internal random number generator (RNG) 580 and may be determined in a manner similar to that used for identifying an optimized UDS seed in response to receiving and installing the firmware update 570. For example, a threshold number of rounds for successful signature generation may be used to select the tuned nonce 575 during an iteration of signature generation at 565 over one or more candidate nonces generated by RNG 580 during a first boot operation following the firmware update 570.

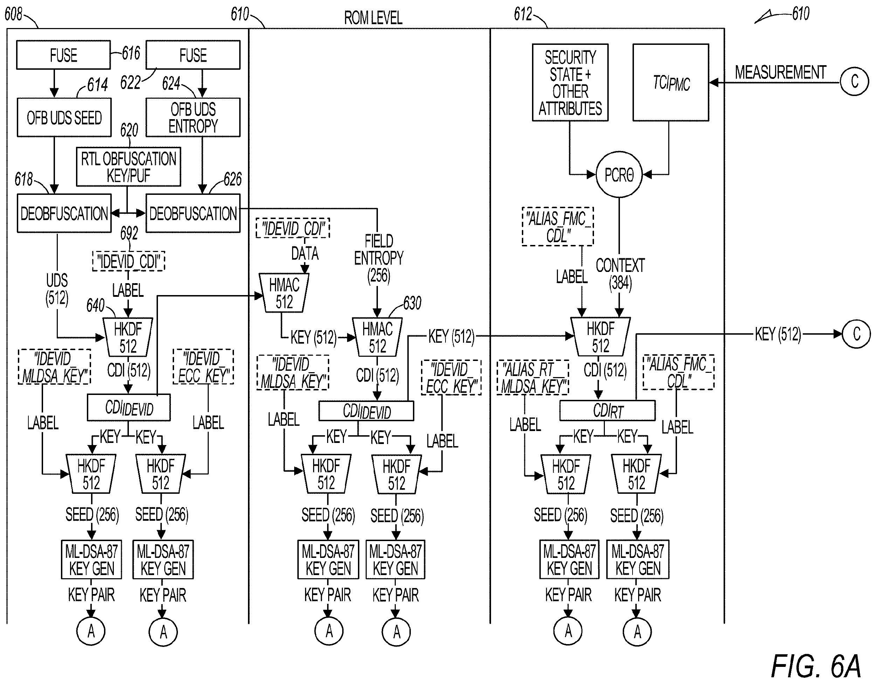

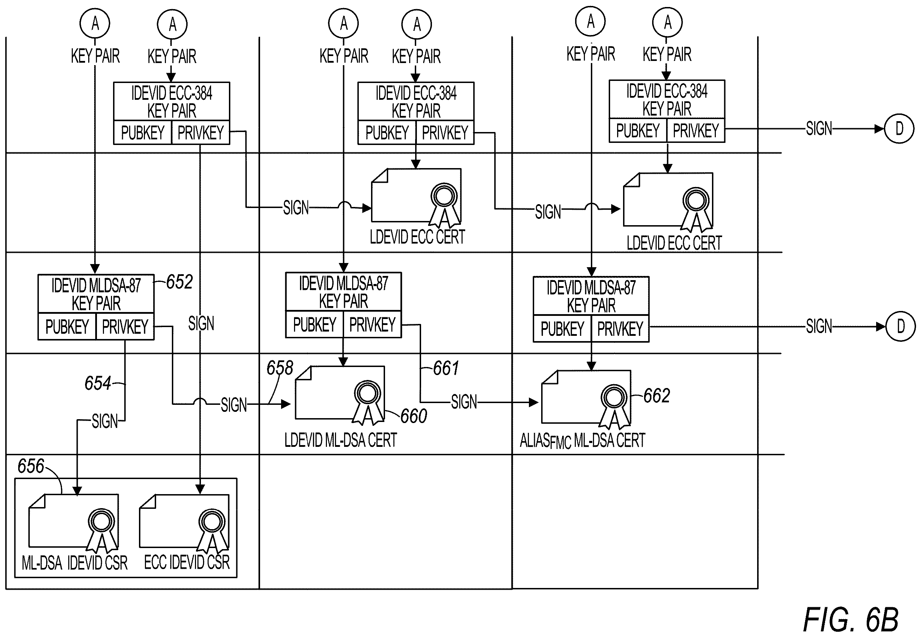

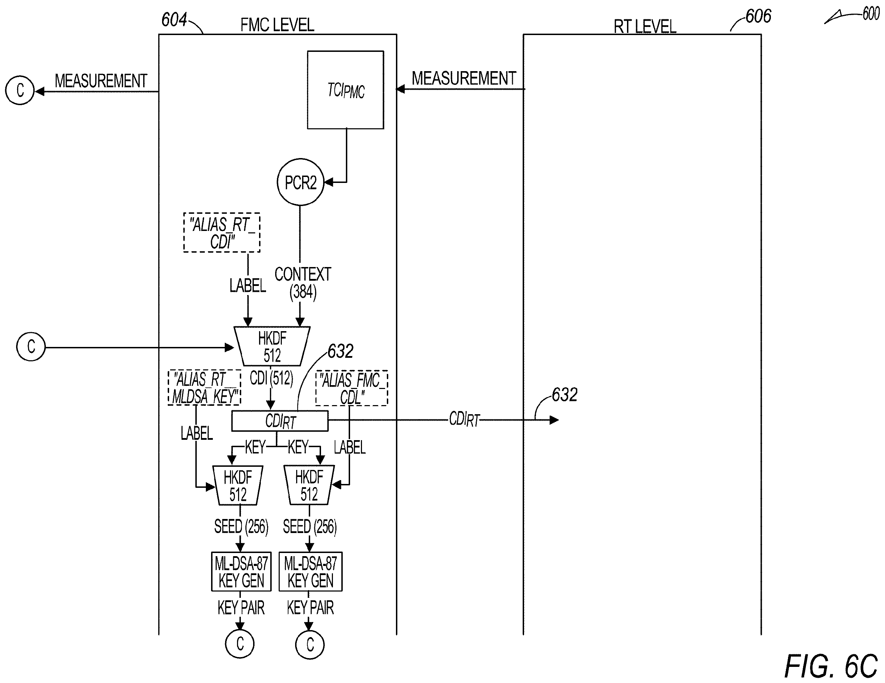

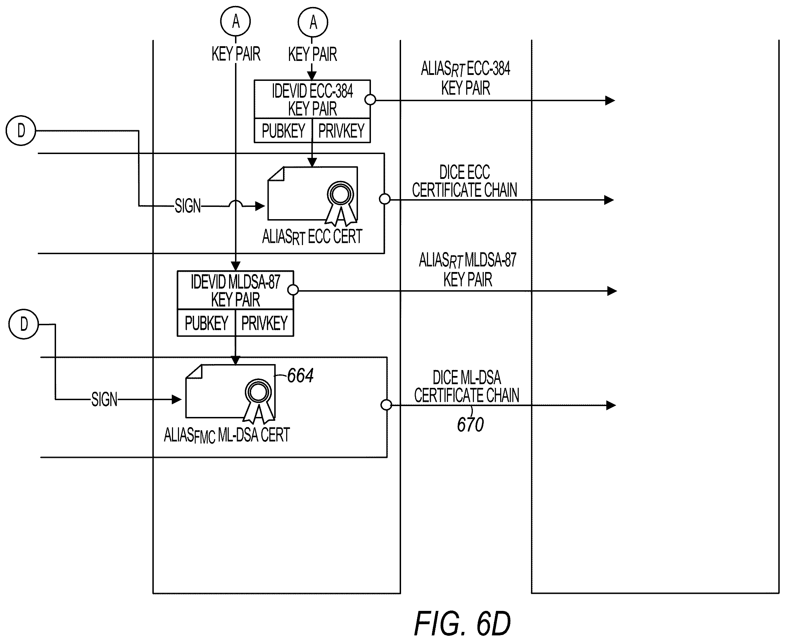

FIG. 6A, 6B, 6C, and 6D taken together are a detailed block diagram of a cryptographic device 600, such as a Caliptra Dice framework. Caliptra is an open-source, silicon-level block designed to serve as a Root of Trust (RoT) for hardware attestation and security in data center chips, ensuring the integrity and authenticity of firmware and other security-critical assets. Caliptra was originally created as part of the Open Compute Project (OCP). The major revisions of the Caliptra specifications are published at OCP. The evolving source code and documentation for Caliptra are in this repository within the CHIPS Alliance Project, a Series of LF Projects, LLC.

Caliptra provides its runtime (RT) code with a cryptographic identity in accordance with the TCG DICE specification. This identity must be rooted in ROM and provides an attestation over the security state of the RTM as well as the code that the RTM booted. A combination of mask ROM and HW macros implement the DICE key derivation and power-on latch, hiding the UDS and only making the CDI-derived signing key visible to firmware.

Device 600 in one example follows the Caliptra specifications and will be generally described herein. Device 600 includes a ROM level 602, an FMC level 604 and a run time (RT) level 606. There are three signature generations in ROM level 602 that are performed at layer 1 608, layer 2 610, and layer 3 612 during booting of the device 600. While the first two signatures generated in layer 1 608 and layer 2 610 utilize a UDS seed 614 stored in the fuse 616 or derived from such seed along with a zeroed nonce, the third signature in layer 3 612 additionally uses a tuned nonce as a part of the signature generation input as described above.

The UDS seed 614 may be stored in an obfuscated form and may be deobfuscated at 618 based on an RTL obfuscation key 620 known only to layer 1 608. A fuse 622 may store an obfuscated field entropy value 624 (for use by device owners) which may be similarly deobfuscated at 626 using key 620.

Device 600 includes several hardware functions, such as hash based key derivation functions (HKDF) and hash-based message authentication code (HMAC) functions that take various inputs such as the UDS seed, CDI (composite device identifier) and various keys and contexts.

Once the UDS seed is read by layer 1 608 at boot, the unobfuscated UDS is then used to derive an IDevID identity. IDevID key is a hardware identity generated by ROM level 602 during manufacturing, is solely wielded by ROM level 602, and should never be exposed externally at any phase of the device 600 lifecycle. IDevID is used to endorse LDevID.

The LDevID CDI is mixed with a hash of FMC, as well as the security state of the device 600, via a FIPS-compliant HMAC 630 to produce CDI_FMC. CDI_FMC is used to derive the AliasFMC keypair. LDevID is used to issue a certificate for Alias. An AliasFMC certificate includes measurements of the security state and FMC. Level 602 makes CDIFMC, AliasFMC, and its certificate, available to FMC level 604.

FMC level 604 mixes CDI_FMC with a hash of runtime firmware to produce CDI_RT 632. FMC uses CDI_RT to derive the Alias_{RT} alias keypair. FMC wields Alias_{FMC} to issue a certificate for AliasRT. This alias certificate includes measurements of runtime firmware. FMC makes CDI_RT, Alias_{RT}, and its certificate, available to application firmware, while withholding CDI_{FMC} and Alias_{FMC}.

Device 600 has a layered architecture. For example, succeeding layers in ROM level 602 needs a certificate from the previous layer to ensure trust and authenticity. In the DICE-CALIPTRA design, each layer derives its own identity and keys based on measurements of the layer below it. This chain of trust starts from a hardware root of trust (such as ROM or immutable boot code) and builds upwards through various firmware and software layers. Each layer requests a signature (certificate) over its identity and measurements, which is typically issued by the layer below using its own attested keys.

This ensures that each layer is only trusted if the previous layer below it is verified and authentic. Requests for signatures between layers is a foundational mechanism for establishing a measured boot chain and attested device identity, extending from silicon to application.

Layer 1 608 includes HKDF 640 that has inputs of IDevID _CDI 642 and the deobfuscated UDS to generate CDI_{IDEVID} 643 which is used an input to HKDF 644 and HKDF 646 to generate respective seeds for ML-DSA-87 key generator 648 and elliptic curve cryptography (ECC)-384 key generator 650. ECC-384 related functions are not relevant for booting timing and will not be described further.

ML-DSA-87 key generator 648 generates a key pair 652 that is used in signing operation 654 to generate signature ML-DSA IDEVID CSR 656 where CSR stands for certificate signing request.

Layer 2 604 uses similar functions and signing operation 658 to generate signature LDEVID ML-DSA CERT 660. Layer 3 606 also uses similar functions and signing operation 661 to generate signature Alias_{FMC}ML-DSA CERT 662. Each signature generation is performed on different inputs to generate a chain of certificates. The generation of Alias_{FMC}ML-DSA CERT 662 includes the use of the tuned nonce to ensure a suitable signature generation time during boot.

FMC level 606 also generates a signature Alias_{RT} ML-DSA CERT 664 that completes a certificate chain referred to as DICE ML-DSA 670 that is provided to RT level 608. RT level 608 can then generate signatures in a similar manner but using a unique nonce for each signature generation.

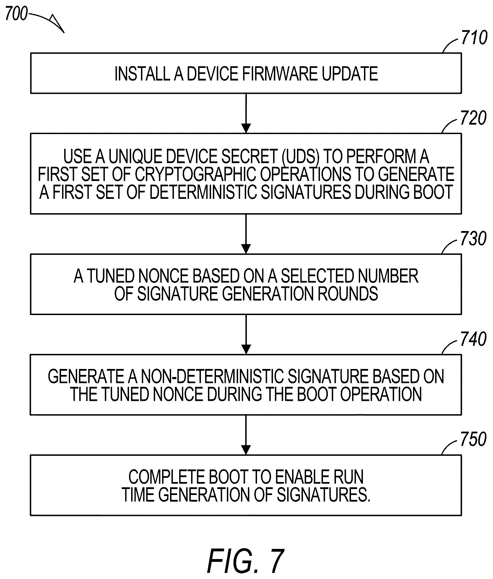

FIG. 7 is a flowchart illustrating a computer implemented method 700 of booting a cryptographic device using a tuned nonce. Method 700 begins at operation 710 by installing a device firmware update in the cryptographic device that includes a device identifier composition engine (DICE). In response to installing the device firmware update and during a boot operation of the device, operation 720 uses a unique device secret (UDS) to perform a first set of cryptographic operations to generate a first set of deterministic signatures. Operation 730 selects a tuned nonce based on a selected number of signature generation rounds. A non-deterministic signature is generated at operation 740 based on the tuned nonce during the boot operation. The boot operation is completed at operation 750 to enable run time generation of signatures.

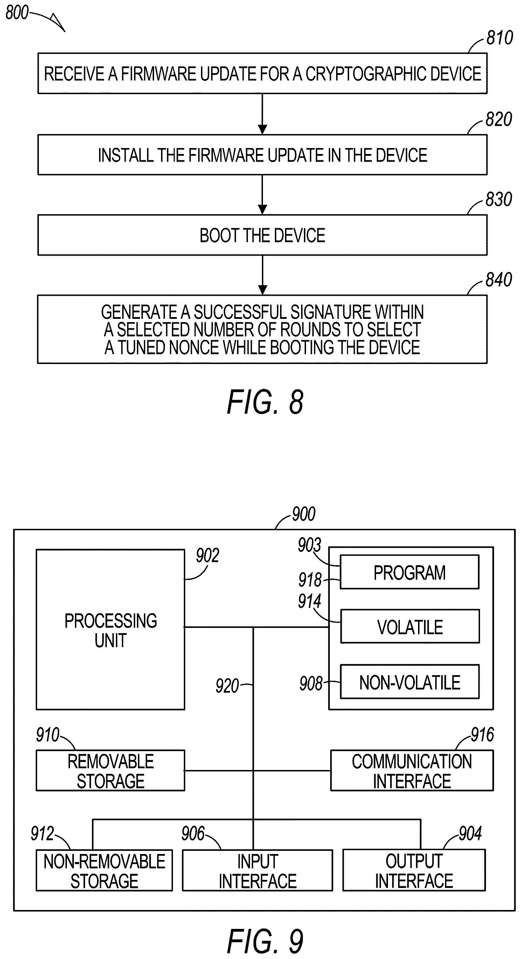

FIG. 8 is a flowchart illustrating a computer implemented method 800 of generating and using a tuned nonce and booting a cryptographic device following a firmware update. Method 800 begins at operation 810 by receiving a firmware update for a cryptographic device having a device identifier composition engine (DICE). The firmware update is installed in the device at operation 820. The cryptographic device is booted at operation 830. A tuned nonce is selected at operation 830 by performing rounds of selecting and using randomly selected nonces and a device generated key while booting the cryptographic device to generate a signature by the cryptographic device until a successful signature is generated within a selected threshold based on a selected number of rounds of signature generation. Future boots of the device will utilize the tuned nonce until a next firmware update is received an installed.

FIG. 9 is a block schematic diagram of a computer system 900 to implement cryptographically enabled devices and servers and for performing methods and algorithms according to example embodiments. All components need not be used in various embodiments.

One example computing device in the form of a computer 900 may include a processing unit 902, memory 903, removable storage 910, and non-removable storage 912. Although the example computing device is illustrated and described as computer 900, the computing device may be in different forms in different embodiments. For example, the computing device may instead be a smartphone, a tablet, smartwatch, smart storage device (SSD), or other computing device including the same or similar elements as illustrated and described with regard to FIG. 9. Devices, such as smartphones, tablets, and smartwatches, are generally collectively referred to as mobile devices or user equipment.

Although the various data storage elements are illustrated as part of the computer 900, the storage may also or alternatively include cloud-based storage accessible via a network, such as the Internet or server-based storage. Note also that an SSD may include a processor on which the parser may be run, allowing transfer of parsed, filtered data through I/O channels between the SSD and main memory.

Memory 903 may include volatile memory 914 and non-volatile memory 908. Computer 900 may include - or have access to a computing environment that includes - a variety of computer-readable media, such as volatile memory 914 and non-volatile memory 908, removable storage 910 and non-removable storage 912. Computer storage includes random access memory (RAM), read only memory (ROM), erasable programmable read-only memory (EPROM) or electrically erasable programmable read-only memory (EEPROM), flash memory or other memory technologies, compact disc read-only memory (CD ROM), Digital Versatile Disks (DVD) or other optical disk storage, magnetic cassettes, magnetic tape, magnetic disk storage or other magnetic storage devices, or any other medium capable of storing computer-readable instructions.

Computer 900 may include or have access to a computing environment that includes input interface 906, output interface 904, and a communication interface 916. Output interface 904 may include a display device, such as a touchscreen, that also may serve as an input device. The input interface 906 may include one or more of a touchscreen, touchpad, mouse, keyboard, camera, one or more device-specific buttons, one or more sensors integrated within or coupled via wired or wireless data connections to the computer 900, and other input devices. The computer may operate in a networked environment using a communication connection to connect to one or more remote computers, such as database servers. The remote computer may include a personal computer (PC), server, router, network PC, a peer device or other common data flow network switch, or the like. The communication connection may include a Local Area Network (LAN), a Wide Area Network (WAN), cellular, Wi-Fi, Bluetooth, or other networks. According to one embodiment, the various components of computer 900 are connected with a system bus 920.

Computer-readable instructions stored on a computer-readable medium are executable by the processing unit 902 of the computer 900, such as a program 918. The program 918 in some embodiments comprises software to implement one or more methods described herein. A hard drive, CD-ROM, and RAM are some examples of articles including a non-transitory computer-readable medium such as a storage device. The terms computer-readable medium, machine readable medium, and storage device do not include carrier waves or signals to the extent carrier waves and signals are deemed too transitory. Storage can also include networked storage, such as a storage area network (SAN). Computer program 918 may be used to cause processing unit 902 to perform one or more methods or algorithms described herein.

### Examples:

1. A cryptographic device performs a method including installing a device firmware update in the cryptographic device that includes a device identifier composition engine (DICE). In response to installing the device firmware update and during a boot operation of the device, performing, using a unique device secret (UDS), a first set of cryptographic operations to generate a first set of deterministic signatures. A tuned nonce is selected based on a selected number of signature generation rounds. A non-deterministic signature is generated based on the tuned nonce during the boot operation. The boot operation is completed to enable run time generation of signatures.
2. The method of example 1 wherein selecting a precision tuned nonce includes one or more rounds of selecting and using randomly selected nonces to generate a signature until a successful signature is generated within a selected threshold.
3. The method of example 2 wherein the selected threshold includes a selected number of rounds or a selected time.
4. The method of any of examples 2-3 wherein the randomly selected nonces are generated by a random number generator of the cryptographic device.
5. The method of any of examples 1-4 and further including using the tuned nonce for boot operations following installation of the device firmware update until a further device firmware update is installed, after which a new tuned nonce is generated.
6. The method of any of examples 1-5 wherein the UDS is stored as ciphertext in memory not available to device firmware.
7. The method of example 6 wherein the UDS is obfuscated via a secret obfuscation key known only to device hardware.
8. The method of any of examples 1-7 wherein the DICE implements post quantum computing cryptographic signing operations based on a Module-Lattice-Based Digital Signature Algorithm (ML-DSA) specification.
9. The method of any of examples 1-8 wherein the DICE is part of a Caliptra framework and wherein Caliptra is an open-source, reusable silicon block designed to establish a "root of trust" (RoT) for security in computer hardware.
10. The method of any of examples 1-9 and further including using randomly selected nonces for run time signature generation following the boot operation.
11. A method includes receiving a firmware update for a cryptographic device having a device identifier composition engine (DICE), installing the firmware update in the device, booting the cryptographic device, and selecting a tuned nonce by performing rounds of selecting and using randomly selected nonces and a device generated key while booting the cryptographic device to generate a signature by the cryptographic device until a successful signature is generated within a selected threshold based on a selected number of rounds of signature generation.
12. The method of example 11 wherein the threshold includes two or three rounds of signature generation.
13. The method of any of examples 11-12 wherein the randomly selected nonces are generated by a random number generator of the cryptographic device.
14. The method of any of examples 11-13 and further including using the tuned nonce is used for boot operations until a further firmware update is installed.
15. The method of any of examples 11-14 wherein the UDS is stored as ciphertext in fuses not available to firmware.
16. The method of example 15 wherein the UDS is obfuscated via a secret obfuscation key known only to device hardware.
17. The method of any of examples 11-16 wherein the DICE implements post quantum computing cryptographic signing operations based on a Module-Lattice-Based Digital Signature Algorithm (ML-DSA) specification.
18. The method of any of examples 11-17 wherein the DICE is part of a Caliptra framework and wherein Caliptra is an open-source, reusable silicon block designed to establish a "root of trust" (RoT) for security in computer hardware.
19. The method of any of examples 11-18 and further including using randomly selected nonces for run time signature generation following booting.
20. A cryptographic device includes a multi-layer device identifier composition engine (DICE), firmware including a firmware update, a first DICE layer configured to generate a first deterministic signature using an optimized unique device secret (UDS) during a boot operation, a second DICE layer configured to generate a second deterministic signature during the boot operation, a third DICE layer configured to generate a non-deterministic signature using a tuned nonce during the boot operation, the tuned nonce tunned to generate a successful signature within a selected number of rounds of signature generation, and a runtime layer configured to use a unique nonce for each signature generated following the booting operation and to use the tuned nonce during boot operations.

The functions or algorithms described herein may be implemented in software in one embodiment. The software may consist of computer executable instructions stored on computer readable media or computer readable storage device such as one or more non-transitory memories or other type of hardware-based storage devices, either local or networked. Further, such functions correspond to modules, which may be software, hardware, firmware or any combination thereof. Multiple functions may be performed in one or more modules as desired, and the embodiments described are merely examples. The software may be executed on a digital signal processor, ASIC, microprocessor, or other type of processor operating on a computer system, such as a personal computer, server or other computer system, turning such computer system into a specifically programmed machine.

The functionality can be configured to perform an operation using, for instance, software, hardware, firmware, or the like. For example, the phrase "configured to" can refer to a logic circuit structure of a hardware element that is to implement the associated functionality. The phrase "configured to" can also refer to a logic circuit structure of a hardware element that is to implement the coding design of associated functionality of firmware or software. The term "module" refers to a structural element that can be implemented using any suitable hardware (e.g., a processor, among others), software (e.g., an application, among others), firmware, or any combination of hardware, software, and firmware. The term, "logic" encompasses any functionality for performing a task. For instance, each operation illustrated in the flowcharts corresponds to logic for performing that operation. An operation can be performed using, software, hardware, firmware, or the like. The terms, "component," "system," and the like may refer to computer-related entities, hardware, and software in execution, firmware, or combination thereof. A component may be a process running on a processor, an object, an executable, a program, a function, a subroutine, a computer, or a combination of software and hardware. The term, "processor," may refer to a hardware component, such as a processing unit of a computer system.

Furthermore, the claimed subject matter may be implemented as a method, apparatus, or article of manufacture using standard programming and engineering techniques to produce software, firmware, hardware, or any combination thereof to control a computing device to implement the disclosed subject matter. The term, "article of manufacture," as used herein is intended to encompass a computer program accessible from any computer-readable storage device or media. Computer-readable storage media can include, but are not limited to, magnetic storage devices, e.g., hard disk, floppy disk, magnetic strips, optical disk, compact disk (CD), digital versatile disk (DVD), smart cards, flash memory devices, among others. In contrast, computer-readable media, i.e., not storage media, may additionally include communication media such as transmission media for wireless signals and the like.

Although a few embodiments have been described in detail above, other modifications are possible. For example, the logic flows depicted in the figures do not require the particular order shown, or sequential order, to achieve desirable results. Other steps may be provided, or steps may be eliminated, from the described flows, and other components may be added to, or removed from, the described systems. Other embodiments may be within the scope of the following claims.

## Claims

1. A method (700) comprising:
installing (710) a device firmware update in a cryptographic device (300, 500) that includes a device identifier composition engine, DICE, (315);
in response (720) to installing the device firmware update (510) and during a boot operation of the device, performing, using a unique device secret, UDS, (525), a first set of cryptographic operations (555) to generate a first set of deterministic signatures;
selecting (730), based on a selected number of signature generation rounds, a tuned nonce 575;
generating (740) (340), based on the tuned nonce and during the boot operation, a non-deterministic signature; and
completing (750) the boot operation to enable run time generation of signatures.

2. The method of claim 1 wherein selecting a precision tuned nonce comprises one or more rounds of selecting and using randomly selected nonces to generate a signature until a successful signature is generated within a selected threshold.

3. The method of claim 2 wherein the selected threshold comprises a selected number of rounds or a selected time.

4. The method of claim 2 wherein the randomly selected nonces are generated by a random number generator (350, 580) of the cryptographic device.

5. The method of any preceding claim and further comprising using the tuned nonce for boot operations following installation of the device firmware update until a further device firmware update is installed, after which a new tuned nonce is generated.

6. The method of any preceding claim wherein the UDS is stored as ciphertext in memory not available to device firmware.

7. The method of claim 6 wherein the UDS is obfuscated via a secret obfuscation key known only to device hardware.

8. The method of any preceding claim wherein the DICE implements post quantum computing cryptographic signing operations based on a Module-Lattice-Based Digital Signature Algorithm, ML-DSA, specification.

9. The method of any preceding claim wherein the DICE is part of a Caliptra framework and wherein Caliptra is an open-source, reusable silicon block designed to establish a root of trust, RoT, for security in computer hardware.

10. The method of any preceding claim and further comprising using randomly selected nonces for run time signature generation following the boot operation.

11. A method (800) comprising:
receiving (810) a firmware update for a cryptographic device having a device identifier composition engine, DICE:
installing (820) the firmware update in the device;
booting (830) the cryptographic device;
selecting (840) a tuned nonce by performing rounds of selecting and using randomly selected nonces and a device generated key while booting the cryptographic device to generate a signature by the device until a successful signature is generated within a selected threshold based on a selected number of rounds of signature generation.

12. The method of claim 11 wherein the threshold comprises two or three rounds of signature generation.

13. The method of claim 11 or 12 wherein the randomly selected nonces are generated by a random number generator (350, 580) of the cryptographic device.

14. The method of any of claims 11 to 13 and further comprising using the tuned nonce is used for boot operations until a further firmware update is installed.

15. A cryptographic device (300, 500) comprising:
a multi-layer device identifier composition engine, DICE, (315);
firmware including a firmware update (510);
a first DICE layer (510) configured to generate a first deterministic signature (555) using an optimized unique device secret, UDS, (525) during a boot operation;
a second DICE layer (515) configured to generate a second deterministic signature (560) during the boot operation;
a third DICE layer (520) configured to generate a non-deterministic signature (340) using a tuned nonce (575) during the boot operation, the tuned nonce tunned to generate a successful signature within a selected number of rounds of signature generation; and
a runtime layer (606) configured to use a unique nonce for each signature generated following the booting operation and to use the tuned nonce during boot operations.
